(19) Europäisches Patentamt
European Patent Office
Office européen des brevets

(11) **EP 0 725 014 B1**

(12) **EUROPEAN PATENT SPECIFICATION**

(45) Date of publication and mention
of the grant of the patent:
**10.03.1999 Bulletin 1999/10**

(51) Int. Cl.$^6$: **B65D 65/38**, B65D 77/06

(21) Application number: **96105697.5**

(22) Date of filing: **15.06.1989**

(54) **Package for hazardous liquid products**

Verpackung für gefährliche, flüssige Produkte

Emballage pour produits liquides dangereux

(84) Designated Contracting States:
**AT BE CH DE ES FR GB GR IT LI LU NL SE**

(30) Priority: **15.06.1988 GB 8814159**
**15.06.1988 GB 8814158**
**17.02.1989 GB 8903707**

(43) Date of publication of application:
**07.08.1996 Bulletin 1996/32**

(62) Document number(s) of the earlier application(s) in
accordance with Art. 76 EPC:
**89306068.1 / 0 347 221**

(73) Proprietor:
**RHONE-POULENC AGRICULTURE LTD.**
**Ongar, Essex CM5 0HW (GB)**

(72) Inventors:
• **Edwards, David Brian,**
**c/o Rhone-Poulenc Agricult.**
**Ongar, Essex, CM5 0HW (GB)**

• **McCarthy, William John,**
**c/o Rhone-Poulenc Agricul.**
**Ongar, Essex, CM5 0HW (GB)**
• **Aldred, Alan James,**
**c/o Rhone-Poulenc Agriculture**
**Ongar, Essex, CM5 0HW (GB)**
• **Jackman, Anthony Douglas**
**Pyrford, Surrey (GB)**

(74) Representative: **Bentham, Stephen**
**J.A. KEMP & CO.**
**14 South Square**
**Gray's Inn**
**London WC1R 5LX (GB)**

(56) References cited:
EP-A- 0 132 726          FR-A- 2 044 386
GB-A-   922 317          GB-A- 1 524 037

## Description

This invention relates to a package according to the preamble of claim 1, as known by GB-A-922317.

Chemicals such as pesticides and herbicides and other potentially harmful materials are often produced as a concentrated solution or dispersion in an organic liquid. Such chemicals are typically supplied in a metal or blow-moulded plastics container with a screw closure. To use the chemical pesticides or herbicides a quantity of the concentrated material is measured out of the container and then mixed with a large volume of water before being sprayed onto a locus to be treated or onto plants. Such concentrated chemical solutions are usually highly toxic so great care must be taken in measuring and mixing them to avoid splashing the liquid chemical and to avoid human or animal contact with the concentrated solution or dispersion.

Efforts have been devoted to the design of containers to minimise the risk of accidental spillage or splashing when their contents are used and also to reduce liquid residues remaining in the containers after use. Plastics containers with wide necks to facilitate pouring of their liquid contents have been used. Blow moulded plastics containers having hollow handles have been made in which the hollow handles are isolated from the body of the container to avoid retention of liquid in the handle.

Nevertheless, with present packages it is relatively easy to spill the contents during the mixing process with the resulting risk of contamination of the environment and risk of contact with humans and animals. Also, it is rare to empty the container and farmers and other users tend to have partly full containers left around. These represent a further hazard. Even when all of the contents have been used it is difficult to dispose of the empty container. It is also difficult to wash adequately the containers and measuring instruments in which the concentrated solutions or dispersions are handled. These devices represent a further hazard to personnel and to the environment.

It has also been proposed to package agricultural chemicals in a container comprising a screw fitting adapted to screw onto a corresponding fitting on a spray tank. The contents of the container should be released only when a liquid-tight seal exists between the tank and the container. Practical difficulties exist in securing widespread use of such a system in view of the need for standardisation of screw fitting sizes and the possibility of leakage if a liquid-tight seal is not achieved.

It has also been proposed to package solid chemicals in water soluble containers but such containers are normally full and no particular difficulties arise in their production or in their use.

It has also been proposed to package chemicals in a water soluble container which releases the packaged chemical only after contact with water. Such proposals have not been adopted in practice for liquid chemicals because of the limitations of known water soluble containers. Such containers have been too prone to rupture if they contained substantial quantities of liquid. It has also proved difficult to avoid pinholes at heat-sealed joints in the container and unacceptable weakness in the material of the container adjacent to heat sealed joints. Such problems are further increased by the susceptibility of water soluble materials such as PVA to the effects of external moisture. The mechanical properties of such materials can be adversely affected by virtue of their water solubility if they come into contact with water in the liquid state. They can also be affected by atmospheric moisture which may be absorbed by the material when the relative humidity is high. When the relative humidity is low water may be lost to the atmosphere by the material and such loss may also have an adverse effect.

The present invention seeks to overcome the disadvantages of known packages, in particular the problems relating to moisture, and to provide a package which contains a non-aqueous liquid and has one or more of the following advantageous features:

The packaged chemical is released only after contact with water in which it is to be dissolved or dispersed, minimising the possibility of accidental contact of the undiluted material with the environment or with humans or animals.

The chemical can be provided in unit dosage form suitable for dilution with a predetermined amount of water removing the need for undiluted chemical to be measured out.

The packaged chemical is easy to use : the packaged chemical can be simply placed in water prior to use of the chemicals.

The need for washing out of residual chemical from containers to render them safe for disposal is removed. Containers which have been in contact with the packaged chemical remain uncontaminated which facilitates their disposal.

The adverse effects on the water soluble material of moisture, either liquid or atmospheric, is reduced or avoided to facilitate the successful packaging of liquids in water soluble materials or water dispersible materials.

The present invention accordingly provides a package for a liquid comprising an outer waterproof container, and an inner water soluble or water dispersible envelope containing the liquid, which is a compound which is potentially toxic or damaging or detrimental to health or the environment or a solution or dispersion in an organic liquid of a compound which is potentially toxic or damaging or detrimental to health or the environment, the envelope being insoluble and not dispersible in the liquid and having a thickness from 10 to 500 micrometres and comprising a flexible wall wherein the outer container is hermetically sealed and there is a space between the container and the envelope, which space is at least about 5% of the volume of the container, the relative humidity in the space being from 45 to 70% at 20°C.

It will be understood that liquid or solid chemicals can be dispersed in the organic liquid : the dispersion can be, for example, an emulsion or a suspension.

The space between the envelope and the outer container is at least about 5% of the volume of the container; the space will preferably not be more than about 30% : larger spaces could be used but may be less attractive commercially : 20 to 25% is preferred and about 25% is especially preferred. The space is isolated from the atmosphere by a hermetic seal on the outer container. The relative humidity in the space is, according to the invention, from 45 to 70%; preferably 50 to 60% (about 50% being most preferred) at a temperature of 20°C.

When the envelope material is e.g. PVA film the mechanical properties of the film are affected by its moisture content: moisture in the film is in equilibrium with moisture both in any air space inside the envelope and in any space between the envelope and the outer container. The point of equilibrium changes with temperature so that the film may either absorb moisture or release it during storage. A relative humidity of 45 to 70% at 20°C has been found to preserve optimum storage properties of the envelope material.

The envelope containing the chemical is preferably only partly full so that the envelope comprises an air space which generally occupies from 2 to 40% preferably from 4% to 10%, of the volume of the envelope. A larger space could be used but is less likely to be commercially attractive. Partial filling of the envelope reduces the risk of rupture of the envelope if it is subjected to shock and reduces the risk of rupture or leakage in the event of an increase in temperature which might make the bag swell or sweat.

The filled envelope is packaged in an outer hermetically sealed waterproof container which both protects the envelope from water and premature dissolution and also acts as a second barrier between the concentrated and potentially toxic liquid and personnel handling the container and the environment. The outer container may have the form of a container formed of plastics material with a reclosable and resealable lid containing two or more of the envelopes. Preferably however each envelope is individually packed in a separate outer container. In this case preferably the outer container is formed of thermoplastics material which is injection moulded or blow-moulded to form a container having a top, substantially flat flange, a side wall and a base. The filled envelope is placed inside the container and then a foil lid is sealed onto the top of the substantially flat flange to provide a completely closed and sealed outer container. The lid is typically made of aluminium foil and heat sealed onto the top flange of the container but it may also be made of a plastics foil or a laminate of paper, plastics and/or aluminium.

The lid is preferably sealed to the top of the container to provide a good barrier to leakage if the envelope breaks; it is preferably bigger than the top of the container to provide a flap which can be gripped easily to remove the lid.

A laminated lid is preferred, for example a paper/aluminium/plastics laminate in which the plastics layer can be heat sealed to the container to provide a hermetic seal. The aluminium layer provides a barrier against any pinholes which may occur in the plastics layer. The paper provides strength, processability and a label can be printed or stuck onto it. The plastics material is preferably polyethylene terephthalate (PET) which provides a good barrier against possible leakage, has good heat sealing characteristics, allows for easy removal of the lid prior to use, does not contain halogen which is potentially damaging to the environment when the lid is to be disposed of, and withstands shock. Other plastics materials can also be used e.g. polyvinylidene chloride (PVDC), polyvinyl alcohol, polypropylene or nylon.

Preferably the outside of the container is printed with information concerning the contents of the envelope, instructions for use, and any warnings concerning the nature and toxicity of the chemical. This information may be carried on the foil lid or on a label attached to the side wall of the outer container.

The outer waterproof container may have a shock absorbing base for example as described in our copending application entitled "Packaging for Liquids". The container, or part of it, e.g. the foot, may be translucent to allow the user to see if leakage of the envelope has occurred. The container may be made from a semi- or substantially rigid material such as polypropylene. The end of the container remote from the base is preferably not substantially narrower than the rest of the container The container may be wide necked and have a smooth interior to allow easy exit of the envelope and may taper towards the base to allow nested stacking of empty containers and also to provide some support against downward movement of the envelope.

The container may have a circular cross-section Put preferably, it has a substantially square or rectangular cross-section with rounded corners or sides. With such an arrangement less space is wasted when the packages are themselves packed together. The cross sectional shape of the foot portion may be similar to that of the rest of the container or, alternatively, it may be of different section to provide a shock absorbing portion of varying width around the container. Thus, if the container is substantially rectangular or square the foot may be circular in configuration and vice versa. The base of the container preferably includes a recessed portion inside the container to collect any liquid which may escape from the envelope

The volume of chemical is preferably from a quarter litre to three litres, more preferably from a half litre to two litres : a half litre is especially preferred.

Such packaging avoids the above difficulties of the prior art. To use the package an appropriate quantity of water is measured out into a vessel such as a sprayer tank and then the envelope, e.g. a bag or sachet, is removed, e.g. tipped, from the container and placed whole into the vessel with a predetermined measure of water and mixed. The contents of the envelope are released when, for example, the material from which e.g a bag or sachet is made dissolves or disperses throughout the water together with the chemical. Thus, there is no possibility of spilling the chemical liquid since it is still in the form of a closed and sealed package when it is mixed with the large volume of water. During mixing any splashing that occurs is splashing only of a diluted chemical and this is naturally not so toxic to personnel or so damaging to the environment should any splashing or spillage occur.

The chemicals which may be packaged include those which are potentially toxic or damaging or detrimental to health or to the environment. They include pesticides for example fungicides, insecticides or herbicides (for example hydroxybenzonitrile herbicides, e.g. bromoxynil or ioxynil or derivatives thereof such as the salts or esters, e.g. heptanoates or octanoates) and, more generally, chemicals which are to be dissolved or dispersed in a large volume of water or aqueous liquid, such as compounds, e.g. metronidazole, used to combat spoilage in industrial aqueous liquids, or compounds for addition to the aqueous circuits of e.g. domestic or industrial heating systems, compounds for addition to swimming pools, photographic materials, inks, dyestuffs, non-aqueous organic acids and cement additives. The pesticides include, e.g. molluscicides for addition to, for example, ponds or streams. When the envelope material is a PVA borates, chlorides and chlorates should generally not be present in the packaged liquid in amounts effective to lead to deterioration of the envelope material or that material should be protected from them.

Suitable water soluble or dispersible materials which are insoluble in the organic solvents used to dissolve or disperse the chemical include polyethylene oxide or methyl cellulose, but preferably the envelope, e.g. a bag or sachet, comprises or is made from polyvinyl alcohol film, i.e. partially or fully alcoholysed or hydrolysed e.g. 40-99%, preferably 70-92% alcoholysed or hydrolysed, polyvinyl acetate film.

The polyvinyl alcohol film may be unoriented, mono-axially oriented or bi-axially oriented. Water soluble materials are preferred. The materials used will generally be cold water soluble; cold water soluble PVA is preferred. It will be understood that other materials may be used when the packaged liquid is to be dissolved or dispersed in warm or hot water.

The maximum tensile strength of the material of the envelope is preferably at least 20, more preferably from 30 to 80 N/mm$^2$ and the elongation at break is preferably 200 to 380%, more preferably from 220 to 350%. Testing for these values is generally carried out at 23°C and 50% relative humidity. The thickness of the envelope material is from 10 to 500, preferably 20 to 100 micrometres. Combinations of these physical properties are especially preferred.

The polyvinyl alcohol material may be extruded as a tube and then inflated to bi-axially orient it or, more preferably, it may be cast. When a cast film is used as is preferable, a tube is formed from the film and the edges heat sealed along the length of the tube. The tube is sealed at one end and then filled with the desired quantity of the chemical. The tube is again sealed above the quantity of chemical to close the envelope and form, for example, a closed bag or sachet. An air space is preferably left above the liquid in the closed envelope and, in addition, the combined volume of the air space and liquid is preferably less than the maximum possible capacity of the envelope so that it is loosely filled and can flex.

When heat seals are made in order to form or close the envelope containing liquid in the package according to the invention the sealing temperature is generally from 140 to 220°C, preferably 160 to 180°C. The jaw pressure is generally from 1 to $3\frac{1}{2}$ kg/cm$^2$, preferably $1\frac{1}{2}$ to $2\frac{1}{2}$ kg/cm$^2$. The dwell time is generally 200msec to 1.5 sec, preferably 450 msec to 1 sec.

In order to ensure optimum processability the heat sealing is generally carried out at 15 to 25°C and 15 to 85% relative humidity (RH). The relative humidity is preferably 35 to 55%. Some routine experimentation may be required to obtain suitable heat seals depending on the envelope material, e.g. the particular grade and the thickness of PVA chosen. The quality of the seals can be checked by visual inspection for areas of opacity or for bubbles or, for example, by inflation of bags without liquid contents. Imperfections in the seal may give rise to a lack of water solubility or water dispersibility of the seal. The heat sealing process can be carried out on conventional heat sealing equipment which permits control and variation of the sealing jaw temperature, jaw pressure and dwell time.

In practice the envelopes according to the invention should release their contents in less than about 10 minutes. When a phytosanitary chemical is packaged the packaged chemical will be placed in the spray tank of a conventional sprayer. The tank will generally be partly filled with water, and the packaged chemical added. When the tank is provided with means to agitate the water the contents of the bag will be released more rapidly. It is preferred that release should take place in less than about a minute, for example in 30 to 40 seconds. It will be understood that the time taken to release the chemical will depend on a number of factors apart from the nature of the bag, including the temperature of the water and the level of agitation.

When the envelope is a bag or sachet the thickness of the walls should be kept to a minimum, provided that the walls have adequate strength in order to facilitate rapid dissolution or dispersion in water. A thickness of e.g. about 30 microns is particularly suitable, although large sachets may require thicker walls. The thicker the wall, the longer dissolution or dispersion of the wall material will take. It will be understood that the envelope according to the invention may comprise an area of wall which is more readily dissolved or dispersed than the rest to facilitate more rapid release of the contents of the envelope.

Suitable organic liquid solvents include petroleum based solvents, e.g. petroleum ethers, mineral oils, aliphatic or aromatic hydrocarbons, e.g. hexane, octane, cyclohexane, benzene, xylene and naphthalene, halogenated aliphatic or aromatic hydrocarbons, e.g. carbon tetrachloride, chloroform, methylene chloride and chlorobenzene, esters e.g. amyl acetate, ketones, e.g. cyclohexane, ethers, or a higher alcohol (lower alcohols may migrate through the water soluble or water dispersible materials described above: this can result in product appearing on the outside of the envelope). It will be understood that mixtures of solvents, e.g. mixtures of a hydrocarbon solvent with another solvent, e.g. a ketone or a higher alcohol, may also be used. The organic liquid must be reasonably dry and typically contains less than 2 to 3% of water to ensure that it does not leak prematurely from the envelope.

The liquid contents of the envelope may be thickened or rendered thixotropic. An increased viscosity in the contents can reduce the likelihood of the envelope being ruptured if the package is subjected to mechanical shock, particularly as the envelope comprises a flexible wall. The contents of the envelope may be rendered more viscous or thixotropic by the inclusion of additives, for example, a modified organophilic, or bentonite, lecithin, polymethylene oxide or silica gel.

The concentrations of pesticide or herbicide dissolved or dispersed in the organic liquid will generally be those conventionally used: in order to reduce the bulk of each envelope, however, concentrations may be increased. Each envelope will preferably contain at least about 500 ml and will preferably contain a convenient standard volume, for example 500 ml or 1 litre, although it will be appreciated that any convenient standard volume may be chosen.

The packaging in accordance with the preferred aspects of this invention provides a tough, two stage packaging which provides for the safe transport of concentrated chemicals and allows handling of potentially toxic chemicals with the minimum risk to personnel and the environment.

The following Example illustrates the production of a water soluble package according to the invention:

EXAMPLE

PVA film was used to form bags containing a liquid herbicide by the following procedure using conventional bag-making equipment.

The PVA film used was SYNTANA Type KA cold water soluble PVA film, thickness 40 micrometres, with a degree of saponification of 88 mol %.

The liquid herbicide was a mixture of bromoxynil and ioxynil esters in solution in a naphthalene solvent. The liquid contained less than 3% water.

An open-topped bag was produced from the PVA film by forming the film around a shoulder and then heat sealing simultaneously the bottom and side of the bag. A jaw pressure of 2 kg/cm$^2$ was used, with a jaw temperature of 160°C and a dwell time of 1 second. The ambient temperature was 18°C and the relative humidity 35%.

500ml of liquid herbicide was then dispensed into the bag the top of which was then sealed leaving an air space of 4 to 5% volume within the bag. Each bag was 120 mm by 205 mm and 10 bags per minute were produced.

Each filled bag was heat sealed at the top after dispensing of the liquid leaving an air space of 4 to 5% of the bag volume, the bag being about 80% full of liquid. The bag is therefore both incompletely filled and has an air space above the liquid.

Each bag was then placed into a container as illustrated in the accompanying drawings. The container material was polypropylene. Each container was sealed using a laminated top comprising PET (polyethylene terephthalate), aluminium and paper layers. The PET layer was heat sealed to the top flange of the container leaving an air space between the bag and the container. The relative humidity in the air space was 50% at 20°C.

A further example of a package in accordance with this invention will now be described by reference to the accompanying drawings, in which:-

Figure 1 is a side elevation of the complete package;
Figure 2 is an underneath view of the outer container; and
Figure 3 shows half of a longitudinal radial section through the complete package.

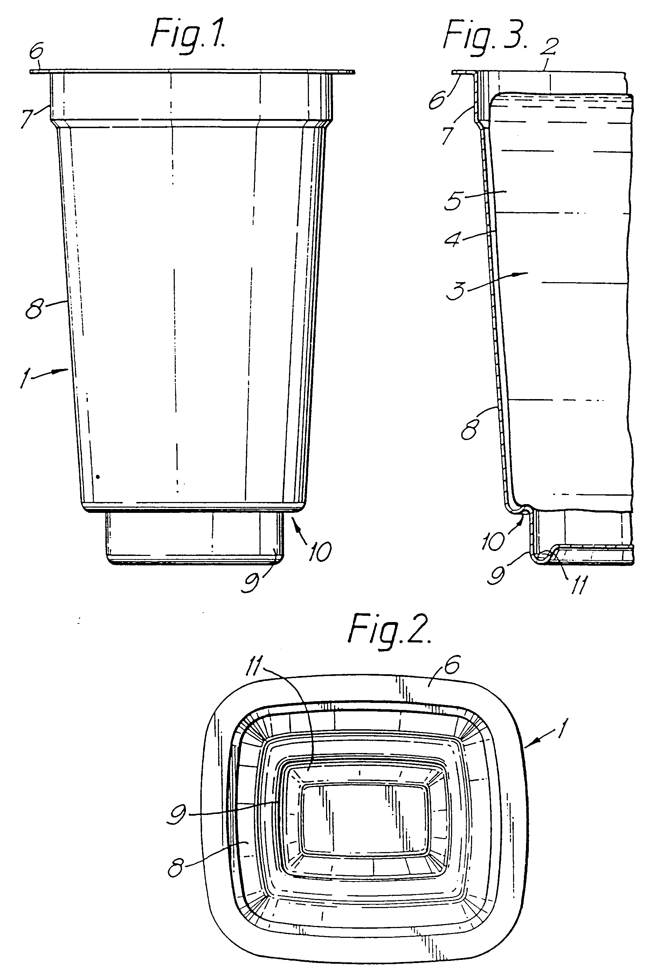

The package comprises an outer container 1 having a foil lid 2 surrounding and enclosing an envelope (a bag or sachet) 3. The bag or sachet 3 is made of cold water soluble grade oriented polyvinyl alcohol film 4 made from 88% alcoholysed polyvinyl acetate having a wall thickness of 30 microns which is neat-sealed into the form of a sachet containing 500 millilitres of a concentrated dispersion 5 of a chemical in an organic liquid. The sachet 3 is housed inside the container 1 which includes a substantially flat top flange 6 connected by upper collar portion 7 to a tapering side wall 8. The container 1 also includes a foot 9 which is joined to the lowest end of the side wall 8 by a shock absorbing section 10. The container has an approximately rectangular cross-section with rounded corners between adjacent sides and with outwardly bowed faces as shown most clearly in Figure 2. The rectangular shape of the container allows relatively efficient packing together of a number of containers. The container is also tapered downwardly as shown in Fig. 1, in this case by 3 to 4° from vertical, and this allows a number of containers to be nested together when empty for easy storage or disposal. The taper also means that the sachet is supported by the walls of the container against downward movement. The container 1 is injection moulded from a block polymer polypropylene having a high melt flow index and typically having a constant wall thickness throughout of, for example, substantially one millimetre. The container is made to be translucent so that, as described below, leakage of the sachet can be detected without opening the container. In an alternative embodiment the foot only can be made translucent so that leakage can be seen. Further, polypropylene is water repellent and this makes washing of the container easier. The material from which the container is made, in this embodiment polypropylene, is sufficiently rigid to support and protect the sachet but also has a degree of flexibility which helps absorb shocks or blows to the package.

The shock absorbing section 10 is corrugated being S-shaped in cross-section as shown in Figure 3 the ratio of the length of the section to its thickness being about 9:1, this ratio being chosen to allow the desired amount of flexing having regard to the flexibility of the material from which it is formed.

The corrugated section forms generally transverse connection joining the lower edge of the side wall 8 to the upper edge of the foot 9 which is capable of flexing as a result of the natural resilience of the thermoplastics material to allow some relative upwards and downwards movement to occur between the foot 9 and the side wall 8. This flexing absorbs shock loads applied to the container 1 for instance if it is inadvertently dropped, e.g. during transport or handling. During transport of the packages any outer packaging containing an array of such packages may be dropped or at least suffer substantial shock loads as it is transported by, for example, lorry, or even when it is lifted and lowered by, for example, a fork lift truck. The shock absorbing portion formed between the foot and the side wall of the container flexes and absorbs such shock loads and this partly cushions the loads applied to the envelope and ensures that the outer container does not split under the application of such a shock load. Equally, after the package has been removed from any outer container the shock absorber absorbs loads if the package is, inadvertently, dropped onto a solid floor just before it is opened to gain access to the envelope. Typically, if the package falls on its foot the shock absorbing section absorbs any shock load so imposed on the container. Equally, if the container falls on its side wall the rounded nature of the side wall means that the side wall can flex and again absorb any shock loads. Further, if the container lands upon its top flange this tends also to flex to absorb the shock load.

As can be seen from Figure 3 the foot 9 is formed with a raised central section surrounded by trough 11. The trough is provided to collect any liquid which accidently leaks from the sachet before use. As the container, or at least this part of it, is translucent it is possible for the user to look at the foot and see whether the sachet has leaked before opening the container. Thus accidental contact with leaked contents can be avoided. As will be appreciated from Fig. 3 the raised central portion of the foot leaves a space underneath it which, when the container is stood on a shelf, would form a closed cavity. This could cause problems because if the sachet does leak into the container then vapour from the concentrate could pass through the container material into the cavity where it would be trapped and could attack the shelf or any coating on the shelf. Thus, to allow ventilation of this cavity the underside of the trough 11 is formed with at least one recess or groove (not shown) directed radially of the foot.

In this embodiment the corrugated section 10 also provides an internal annular shoulder to the container upon which the sachet rests. The curve of the corrugation provides a smooth surface which will not strain or puncture the sachet. The sachet is thus supported above the bottom of the container resulting in further isolation from mechanical shock. The sachet can also flex under stress into the space to absorb shock.

The interior of the container is deliberately made to be smooth so as to allow the sachet to slide easily out of the container for use. The inside surface of the container is preferably configured and adapted to facilitate sliding exit of the envelope from the outer container.

The sachet 3 is held inside the container 1 by the foil lid 2 which is heat-sealed onto the flange 6 of the container 1 or which may alternatively be connected by an adhesive.

The foil lid 2 in this embodiment is made from a heat sealable laminated material such as a polyethylene terephthalate/aluminium/paper laminate and is larger than the external diameter of the flange 6 to leave a large flap around the container which can be used to tear-off the lid.

The outer container 1 and lid 2 provide protection for the sachet 3 and so protect it from contact with water and hence its premature dissolution. It also provides an additional barrier layer around the concentrate 5 inside the bag or sachet 3 to provide an additional barrier in case of rupture of the bag or sachet 3 which prevents the potentially harmful chemical 5 from contact with personnel or the environment. However, to use the concentrate, the foil lid 2 is simply removed and then the sachet, still sealed, is dropped into a sprayer tank containing a predetermined amount of water. The material 4 of the bag or sachet dissolves rapidly in the water so allowing the contents 5 to be dispersed throughout the water in the sprayer tank on mixing. The outer container 1 is not contaminated with the concentrated chemical and can thus be disposed of without taking any special precautions and the personnel dealing with the concentrated chemical never come into contact with it, so reducing the hazards and risks involved in handling such potentially harmful materials.

## Claims

1. A package for a liquid (5) comprising an outer waterproof container (1), and an inner water soluble or water dispersible envelope (3) containing the liquid (5), which is a compound which is potentially toxic or damaging or detrimental to health or the environment or a solution or dispersion in an organic liquid of a compound which is potentially toxic or damaging or detrimental to health or the environment, the envelope (3) being insoluble and not dispersible in the liquid (5) and having a thickness from 10 to 500 micrometres and comprising a flexible wall whereby the outer container is hermetically sealed, characterised in that there is a space between the container (1) and the envelope (3), which space is at least about 5% of the volume of the container, the relative humidity in the space being from 45 to 70% at 20°C.

2. A package according to claim 1 in which the liquid (5) comprises a pesticide.

3. A package according to claim 1 or 2 in which the relative humidity in the space is from 50 to 60% at 20°C.

4. A package according to claim 1, 2 or 3 in which the space is at least about 20% of the volume of the container (1).

5. A package according to any one of the preceding claims in which the space is not more than about 30% of the volume of the container (1).

6. A package according to any one of the preceding claims in which the outer container (1) is semi-rigid.

7. A package according to any one of the preceding claims in which the envelope (3) comprises an air space.

8. A package according to claim 7 in which the air space is 2 to 40% of the volume of the envelope (3).

9. A package according to claim 8 wherein the air space is 4 to 10% of the volume of the envelope (3).

10. A package according to any one of the preceding claims in which the combined volume of liquid (5) and any air space is less than the maximum possible capacity of the envelope (3) so that the envelope is loosely filled and can flex.

11. A package according to any one of the preceding claims which comprises from a quarter to three litres of liquid (5).

12. A package according to claim 11 which comprises from a half litre to two litres of liquid (5).

13. A package according to any one of the preceding claims wherein the maximum tensile strength of the envelope material (4) is at least 20 N/mm$^2$ and the elongation at break is from 200 to 380%.

14. A package according to any one of claims 1 to 12 wherein the maximum tensile strength of the envelope material (4) is from 30 to 80 N/mm$^2$ and the elongation at break is from 220 to 350%.

15. A package according to any one of the preceding claims wherein the thickness of the envelope material (4) is from 20 to 100 micrometres.

16. A package according to any one of the preceding claims in which the envelope material (4) comprises polyethylene oxide or methyl cellulose.

17. A package according to any one of claims 1 to 15 in which the envelope material (4) comprises polyvinyl alcohol.

18. A package according to any one of the preceding claims in which the contents are released in less than about 10 minutes after contact with the water.

19. A package according to any one of the preceding claims in which the contents are released in less than about 1 minute.

20. A package according to any one of the preceding claims in which the organic liquid (5) comprises a petroleum based solvent, a mineral oil, an aliphatic or aromatic hydrocarbon, a halogenated aliphatic or aromatic hydrocarbon, an ester, a ketone, an ether or a higher alcohol.

21. A package according to any one of the preceding claims in which the liquid contents (5) of the envelope comprise additive to increase the viscosity of the liquid.

22. A package according to claim 21 in which the liquid contents (5) comprise a modified organophilic, or bentonite, lecithin, polymethylene oxide or silica gel to increase the viscosity.

23. A package according to any one of the preceding claims which comprises a fungicide or insecticide.

24. A package according to any one of the preceding claims wherein the inside surface of the outer container (1) is configured and adapted to facilitate sliding exit of the envelope from the outer container.

25. A package according to any one of the preceding claims which comprises a removable lid (2) sealing the outer container (1).

26. A package according to claim 25 in which the lid (2) comprises a paper/aluminium/plastics laminate in which the plastics layer is heat sealed to the outer container (1).

27. A package according to claim 26 in which the plastics layer comprises polyethylene terephthalate.

28. A package according to any one of the preceding claims in which the outer container (1) comprises polypropylene.

29. A package according to any one of the preceding claims in which the container (1) is translucent or includes a translucent foot.

30. A package according to any one of the preceding claims wherein the base (9) includes a recessed portion (11) inside the container (1) to collect any liquid which may escape from the envelope (3).

31. A package according to claim 30 wherein said recessed portion (11) is formed between an outer side wall of the base and a raised central portion of the base.

32. A package according to claim 31 wherein the underside of the recessed portion (11) forms an annular stand for the package and at least one slot or groove is provided in the said underside to enable communication between the region under said raised central portion of the base and the exterior when the package is stood on a surface.

33. A package according to any one of the preceding claims in which the base of the container (9) comprises a translucent foot adapted to receive liquid so as to allow the user to see if leakage has occurred from the envelope (3).

34. A package according to any one of the preceding claims in which the end of the container (1) remote from the base (9) is not substantially narrower than the rest of the container.

35. A package according to any one of the preceding claims in which the container (1) tapers towards the base (9) allowing the container when empty to nest in other, like, empty containers.

**Patentansprüche**

1. Verpackung für eine Flüssigkeit (5), umfassend einen äußeren wasserdichten Behälter (1) und eine innere, in Wasser lösliche oder in Wasser dispergierbare Hülle (3), enthaltend die Flüssigkeit (5), die eine Verbindung ist, die potentiell toxisch oder schädlich oder nachteilig für die Gesundheit oder die Umgebung ist oder eine Lösung oder Dispersion einer potentiell toxischen oder für die Gesundheit oder die Umgebung schädlichen oder nachteiligen Verbindung, wobei die Hülle (3) in der Flüssigkeit (5) unlöslich und nicht dispergierbar ist und eine Dicke von 10 bis 500 $\mu$m aufweist und eine flexible Wand umfaßt, wobei der äußere Behälter hermetisch versiegelt ist, dadurch gekennzeichnet, daß ein Hohlraum zwischen dem Behälter (1) und der Hülle (3) vorhanden ist, wobei der Hohlraum mindestens etwa 5 % des Volumens des Behälters ausmacht und die relative Feuchtigkeit in dem Hohlraum 45 bis 70 % bei 20°C beträgt.

2. Verpackung nach Anspruch 1, wobei die Flüssigkeit (5) ein Pestizid umfaßt.

3. Verpackung nach Anspruch 1 oder 2, wobei die relative Feuchtigkeit in dem Hohlraum 50 bis 60 % bei 20°C beträgt.

4. Verpackung nach Anspruch 1, 2 oder 3, wobei der Hohlraum mindestens etwa 20 % des Volumens des Behälters (1) ausmacht.

5. Verpackung nach einem der vorangehenden Ansprüche, wobei der Hohlraum nicht mehr als etwa 30 % des Volumens des Behälters (1) ausmacht.

6. Verpackung nach einem der vorangehenden Ansprüche, wobei der äußere Behälter (1) halbsteif ist.

7. Verpackung nach einem der vorangehenden Ansprüche, wobei die Hülle (3) einen Luftraum umfaßt.

8. Verpackung nach Anspruch 7, wobei der Luftraum 2 bis 40 % des Volumens der Hülle (3) ausmacht.

9. Verpackung nach Anspruch 8, wobei der Luftraum 4 bis 10 % des Volumens der Hülle (3) ausmacht.

10. Verpackung nach einem der vorangehenden Ansprüche, wobei das kombinierte Volumen der Flüssigkeit (5) und eines etwaigen Luftraums geringer ist als das maximal mögliche Fassungsvermögen der Hülle (3), so daß die Hülle locker gefüllt ist und sich verformen kann.

11. Verpackung nach einem der vorangehenden Ansprüche, umfassend 1/4 bis 3 Liter Flüssigkeit (5).

12. Verpackung nach Anspruch 11, umfassend 1/2 bis 2 Liter Flüssigkeit (5).

13. Verpackung nach einem der vorangehenden Ansprüche, wobei die maximale Zugfestigkeit des Hüllmaterials (4) mindestens 20 N/mm$^2$ und die Bruchdehnung 200 bis 380 % beträgt.

14. Verpackung nach einem der Ansprüche 1 bis 12, wobei die maximale Zugfestigkeit des Hüllmaterials (4) 30 bis 80 N/mm$^2$ und die Bruchdehnung 220 bis 350 % beträgt.

15. Verpackung nach einem der vorangehenden Ansprüche, wobei die Dicke des Hüllmaterials (4) 20 bis 100 μm beträgt.

16. Verpackung nach einem der vorangehenden Ansprüche, wobei das Hüllmaterial (4) Polyethylenoxid oder Methylcellulose umfaßt.

17. Verpackung nach einem der Ansprüche 1 bis 15, wobei das Hüllmaterial (4) Polyvinylalkohol umfaßt.

18. Verpackung nach einem der vorangehenden Ansprüche, wobei der Inhalt in weniger als etwa zehn Minuten nach Kontakt mit Wasser freigesetzt wird.

19. Verpackung nach einem der vorangehenden Ansprüche, wobei der Inhalt in weniger als etwa einer Minute freigesetzt wird.

20. Verpackung nach einem der vorangehenden Ansprüche, wobei die organische Flüssigkeit (5) ein Lösungsmittel auf Erdölbasis, ein Mineralöl, einen aliphatischen oder aromatischen Kohlenwasserstoff, einen halogenierten aliphatischen oder aromatischen Kohlenwasserstoff, einen Ester, ein Keton, einen Ether oder einen höheren Alkohol umfaßt.

21. Verpackung nach einem der vorangehenden Ansprüche, wobei der flüssige Inhalt (5) der Hülle ein Additiv zur Erhöhung der Viskosität der Flüssigkeit umfaßt.

22. Verpackung nach Anspruch 21, wobei der flüssige Inhalt (5) eine modifizierte organophile Verbindung oder Bentonit, Lecithin, Polymethylenoxid oder Silicagel zur Erhöhung der Viskosität enthält.

23. Verpackung nach einem der vorangehenden Ansprüche, umfassend ein Fungizid oder Insektizid.

24. Verpackung nach einem der vorangehenden Ansprüche, wobei die innere Oberfläche des äußeren Behälters (1) so geformt und ausgebildet ist, daß sie ein Herausgleiten der Hülle aus dem äußeren Behälter erleichtert.

25. Verpackung nach einem der vorangehenden Ansprüche, umfassend einen entfernbaren Deckel (2), der den äußeren Behälter (1) versiegelt.

26. Verpackung nach Anspruch 25, wobei der Deckel (2) ein Papier/Aluminium/Kunststoff-Laminat umfaßt, bei dem die Kunststoffschicht mit dem äußeren Behälter (1) thermisch verschweißt ist.

27. Verpackung nach Anspruch 26, wobei die Kunststoffschicht Polyethylenterephthalat umfaßt.

28. Verpackung nach einem der vorangehenden Ansprüche, wobei der äußere Behälter (1) Polypropylen umfaßt.

29. Verpackung nach einem der vorangehenden Ansprüche, wobei der Behälter (1) durchscheinend ist oder einen durchscheinenden Fuß umfaßt.

30. Verpackung nach einem der vorangehenden Ansprüche, wobei die Basis (9) einen vertieften Abschnitt (11) innerhalb des Behälters (1) umfaßt, um etwaige Flüssigkeit, die aus der Hülle (3) austreten kann, aufzunehmen.

31. Verpackung nach Anspruch 30, wobei der vertiefte Teil (11) zwischen einer äußeren Seitenwand der Basis und einem erhöhten mittleren Abschnitt der Basis gebildet ist.

32. Verpackung nach Anspruch 31, wobei die Unterseite des vertieften Abschnitts (11) einen ringförmigen Fuß für die Verpackung bildet und mindestens eine Rille oder Aussparung in der Unterseite vorgesehen ist, um eine Verbindung zwischen dem Bereich unter dem erhöhten mittleren Abschnitt der Basis und der äußeren Umgebung zu ergeben, wenn die Verpackung auf eine Oberfläche gestellt wird.

33. Verpackung nach einem der vorangehenden Ansprüche, wobei die Basis des Behälters (9) einen durchscheinenden Fuß umfaßt, der geeignet ist, Flüssigkeit aufzunehmen, und es dem Benutzer erlaubt, festzustellen, wenn eine Undichtigkeit in der Hülle (3) eingetreten ist.

34. Verpackung nach einem der vorangehenden Ansprüche, wobei das Ende des Behälters (1), das von der Basis (9) entfernt ist, nicht wesentlich enger ist als der Rest des Behälters.

**35.** Verpackung nach einem der vorangehenden Ansprüche, wobei der Behälter (1) sich in Richtung der Basis (9) verjüngt, was es erlaubt, den Behälter, wenn er leer ist, in andere ähnliche leere Behälter zu stapeln.

**Revendications**

**1.** Emballage pour un liquide (5) comportant un récipient extérieur (1) étanche à l'eau, et une enveloppe intérieure (3) soluble dans l'eau ou dispersible dans l'eau, contenant le liquide (5), lequel est un composé qui est potentiellement toxique ou préjudiciable ou nuisible pour la santé ou l'environnement, ou une solution ou dispersion dans un liquide organique d'un composé qui est potentiellement toxique ou préjudiciable ou nuisible pour la santé ou l'environnement, l'enveloppe (3) étant insoluble et non dispersible dans le liquide (5) et ayant une épaisseur de 10 à 500 micromètres et comportant une paroi flexible, grâce à quoi le récipient extérieur peut être scellé hermétiquement, caractérisé en ce qu'il y a un espace entre le récipient (1) et l'enveloppe (3), lequel espace est d'au moins environ 5 % du volume du récipient, l'humidité relative dans l'espace étant de 45 à 70 % à 20°C.

**2.** Emballage selon la revendication 1, dans lequel le liquide (5) comprend un pesticide.

**3.** Emballage selon la revendication 1 ou 2, dans lequel l'humidité relative dans l'espace est de 50 à 60 % à 20°C.

**4.** Emballage selon la revendication 1, 2 ou 3, dans lequel l'espace est d'au moins environ 20 % du volume du récipient (1).

**5.** Emballage selon l'une quelconque des revendications précédentes, dans lequel l'espace n'est pas supérieur à environ 30 % du volume du récipient (1).

**6.** Emballage selon l'une quelconque des revendications précédentes, dans lequel le récipient extérieur (1) est semi-rigide.

**7.** Emballage selon l'une quelconque des revendications précédentes, dans lequel l'enveloppe (3) comporte un espace d'air.

**8.** Emballage selon la revendication 7, dans lequel l'espace d'air est de 2 à 40 % du volume de l'enveloppe (3).

**9.** Emballage selon la revendication 8, dans lequel l'espace d'air est de 4 à 10 % du volume de l'enveloppe (3).

**10.** Emballage selon l'une quelconque des revendications précédentes, dans lequel le volume combiné du liquide (5) et de tout espace d'air est inférieur à la capacité maximale possible de l'enveloppe (3) afin que l'enveloppe soit remplie de façon lâche et puisse fléchir.

**11.** Emballage selon l'une quelconque des revendications précédentes, qui contient un quart à trois litres de liquide (5).

**12.** Emballage selon la revendication 11, qui contient un demi-litre à deux litres de liquide (5).

**13.** Emballage selon l'une quelconque des revendications précédentes, dans lequel la résistance maximale à la traction de la matière (4) de l'enveloppe est d'au moins 20 N/mm$^2$ et l'allongement la rupture est de 200 à 380 %.

**14.** Emballage selon l'une quelconque des revendications 1 à 12, dans lequel la résistance maximale à la traction de la matière (4) de l'enveloppe de 30 à 80 N/mm$^2$ et l'allongement à la rupture est de 220 à 350 %.

**15.** Emballage selon l'une quelconque des revendications précédentes, dans lequel l'épaisseur de la matière (4) de l'enveloppe est de 20 à 100 micromètres.

**16.** Emballage selon l'une quelconque des revendications précédentes, dans lequel la matière de l'enveloppe (4) comprend de l'oxyde de polyéthylène ou de la méthylcellulose.

**17.** Emballage selon l'une quelconque des revendications 1 à 15, dans lequel la matière (4) de l'enveloppe comprend de l'alcool polyvinylique.

**18.** Emballage selon l'une quelconque des revendications précédentes, dans lequel le contenu est libéré en moins d'environ 10 minutes après contact avec l'eau.

**19.** Emballage selon l'une quelconque des revendications précédentes, dans lequel le contenu est libéré en moins d'environ 1 minute.

**20.** Emballage selon l'une quelconque des revendications précédentes, dans lequel le liquide organique (5) comprend un solvant à base de pétrole, une huile minérale, un hydrocarbure aliphatique ou aromatique, un hydrocarbure halogéné aliphatique ou aromatique, un ester, une cétone, un éther ou un alcool supérieur.

21. Emballage selon l'une quelconque des revendications précédentes, dans lequel le contenu liquide (5) de l'enveloppe comprend un additif pour augmenter la viscosité du liquide.

22. Emballage selon la revendication 21, dans lequel le contenu liquide (5) comprend un agent organophile modifié, ou de la bentonite, de la lécithine, de l'oxyde de polyméthylène ou du gel de silice pour augmenter la viscosité.

23. Emballage selon l'une quelconque des revendications précédentes, qui comprend un fongicide ou un insecticide.

24. Emballage selon l'une quelconque des revendications précédentes, dans lequel la surface intérieure du récipient extérieur (1) est configurée et conçue pour faciliter la sortie de l'enveloppe en glissant du récipient extérieur.

25. Emballage selon l'une quelconque des revendications précédentes, qui comporte un couvercle amovible (2) scellant le récipient extérieur (1).

26. Emballage selon la revendication 25, dans lequel le couvercle (2) comporte un stratifié papier/aluminium/matière plastique dans lequel la couche de matière plastique est thermoscellée sur le récipient extérieur (1).

27. Emballage selon la revendication 26, dans lequel la couche de matière plastique comprend du téréphtalate de polyéthylène.

28. Emballage selon l'une quelconque des revendications précédentes, dans lequel le récipient extérieur (5) comprend du polypropylène.

29. Emballage selon l'une quelconque des revendications précédentes, dans lequel le récipient (1) est translucide ou comprend un pied translucide.

30. Emballage selon l'une quelconque des revendications précédentes, dans lequel l'embase (9) comprend une partie en creux (11) à l'intérieur du récipient (1) pour recueillir tout liquide pouvant s'échapper de l'enveloppe (3).

31. Emballage selon la revendication 30, dans lequel ladite partie en creux (11) est formée entre une paroi latérale extérieure de l'embase et une partie centrale surélevée de l'embase.

32. Emballage selon la revendication 31, dans lequel le côté de dessous de la partie en creux (11) forme un support annulaire pour l'emballage et au moins une fente ou gorge est prévue dans ledit côté de dessous pour permettre une communication entre la zone située au-dessous de ladite partie centrale surélevée de l'embase et l'extérieur lorsque l'emballage est posé sur une surface.

33. Emballage selon l'une quelconque des revendications précédentes, dans lequel l'embase du récipient (9) comporte un pied translucide conçu pour recevoir un liquide afin de permettre à l'utilisateur de voir si une fuite s'est produite à partir de l'enveloppe (3).

34. Emballage selon l'une quelconque des revendications précédentes, dans lequel l'extrémité du récipient (1) éloignée de l'embase (9) n'est pas sensiblement plus étroite que la partie restante du récipient.

35. Emballage selon l'une quelconque des revendications précédentes, dans lequel le récipient (1) diminue de section vers l'embase (9), permettant au récipient, lorsqu'il est vide, de s'emboîter dans d'autres récipients vides identiques.

Fig.1.

Fig.3.

Fig.2.